# EUROPÄISCHE PATENTANMELDUNG

(11) **EP 3 871 929 A1**
(43) Veröffentlichungstag der Anmeldung: **01.09.2021**
(21) Anmeldenummer: 21158379.4
(22) Anmeldetag: 22.02.2021
(51) Int. Cl.: B60R 25/20, E02F 9/20

(54) **SYSTEM UND VERFAHREN ZUM INDIVIDUALISIEREN UND STEUERN EINES BAUGERÄTS**

(30) Priorität: 27.02.2020 DE 102020105244
(71) Anmelder: Wacker Neuson Produktion GmbH & Co. KG, 85084 Reichertshofen (DE)
(72) Erfinder: BERGER, Rudolf, 82031 Grünwald (DE); DILLER, Patrick, 85107 Baar-Ebenhausen (DE); WEISKOPF, Alto, 85250 Altomünster (DE); PFETSCH, Stefan, 81371 München (DE)
(74) Vertreter: Müller Hoffmann & Partner

(57) **Zusammenfassung**

System zum Individualisieren und Steuern eines Baugeräts (1), mit einem getrennt von dem Baugerät (1) vorgesehenen benutzerseitigen Endgerät (2); einer Datenvorrichtung (6, 7, 8) zum Austauschen von Daten zwischen dem Baugerät (1) und dem Endgerät (2); einer Identifikationseinrichtung (10) zum Identifizieren einer Kombination aus Baugerät (1) und Endgerät (2) aufgrund von ausgetauschten Daten; einer Dokumentationseinrichtung (11) zum Dokumentieren von Betriebsparametern für die identifizierte Kombination von Baugerät () und Endgerät (2); und mit einer Aktivierungseinrichtung zum Aktivieren von Maßnahmen auf Seiten des Baugeräts (1) in Abhängigkeit von der identifizierten Kombination von Baugerät (1) und Endgerät (2). Aufgrund der erkannten Kombination aus Baugerät (1) und Endgerät (2) können verschiedene weitere Betriebsparameter dokumentiert werden und dem Benutzer des Baugeräts (1) zugeordnet werden. Weiterhin können in Abhängigkeit von der erkannten Kombination verschiedene Maßnahmen aktiviert werden.

## Beschreibung

Die Erfindung betrifft ein System und ein Verfahren zum Individualisieren und Steuern eines Baugeräts.

Zur Individualisierung und Steuerung von Geräten ist es zum Beispiel für Kraftfahrzeuge bekannt, die Sitzeinstellung des Fahrers im Autoschlüssel zu speichern. Wenn der Fahrer das Fahrzeug mit seinem Autoschlüssel öffnet, stellt sich der Fahrersitz automatisch in die gespeicherte Stellung, so dass der Fahrer nachfolgend keine manuelle Verstellung des Fahrersitzes mehr vornehmen muss. Analog können auch die Rückspiegel und die Stellung des Lenkrads entsprechend dem vorab im Fahrzeugschlüssel gespeicherten, auf den Fahrer individualisierten Stand eingestellt werden.

Für Baugeräte gibt es solche individualisierenden Funktionalitäten nicht, da dort kein Fahrzeugschlüssel in der Weise üblich ist, wie er bei Kraftfahrzeugen bekannt ist. Vielmehr benötigen gerade kleinere Baugeräte überhaupt keinen Schlüssel, um in Betrieb genommen werden zu können. Bei anderen Geräten kann zum Beispiel ein einheitlicher Schlüssel verwendet werden, der unternehmensweit für viele Geräte eines Bauunternehmens funktioniert. Bei vielen Geräten verbleibt der Schlüssel sogar dauerhaft am Gerät und wird lediglich für Transportzwecke oder zur dauerhaften Inaktivierung vom Gerät entfernt.

Bei Baugeräten ist es zudem nicht möglich, ein individualisiertes Verhalten zu verwirklichen, das gezielt für nur einen Bediener vorgesehen und dementsprechend individualisiert ist. Eine Identifikation eines Benutzers ist nicht möglich.

Der Erfindung liegt die Aufgabe zugrunde, ein System und ein Verfahren anzugeben, mit dem eine benutzerspezifische Individualisierung eines Baumaschinenverhaltens erreicht werden kann. Zudem sollen benutzerspezifische Daten zu dem jeweils aktuell das Baugerät bedienenden Benutzer erfasst werden können.

Die Aufgabe wird erfindungsgemäß durch ein System mit den Merkmalen von Anspruch 1 und durch ein Verfahren gemäß dem nebengeordneten Anspruch gelöst. Vorteilhafte Ausgestaltungen sind in den abhängigen Ansprüchen angegeben.

Es wird ein System zum Individualisieren und Steuern eines Baugeräts angegeben, mit einem getrennt von dem Baugerät vorgesehenen benutzerseitigen Endgerät, einer Datenvorrichtung zum Austauschen von Daten zwischen dem Baugerät und dem Endgerät, einer Identifikationseinrichtung zum Identifizieren einer Kombination aus Baugerät und Endgerät aufgrund von ausgetauschten Daten, einer Dokumentationseinrichtung zum Dokumentieren von Betriebsparametern für die identifizierte Kombination von Baugerät und Endgerät, und mit einer Aktivierungseinrichtung zum Aktivieren von Maßnahmen auf Seiten des Baugeräts in Abhängigkeit von der identifizierten Kombination von Baugerät und Endgerät.

Das Baugerät kann vielfältig ausgestaltet sein. Zum Beispiel kann es sich dabei um ein besitzbares Baugerät, ein fahrbares Baugerät mit Räder- oder Kettenfahrwerk, einen Lader, einen Radlader, einen Bagger, eine Vibrationsplatte zur Bodenverdichtung, einen Stampfer zur Bodenverdichtung o.ä. handeln. Als weitere Baugeräte kommen Geräte zur Betonverdichtung (wie z.B. sogenannte Innenrüttler oder Außenrüttler), Aufbruchhämmer oder Fugenschneider in Betracht.

Das Endgerät ist benutzerseitig zu führen und stellt insoweit eine Kennung bzw. Identifizierung des Benutzers sicher. Zum Beispiel kann es sich dabei um das Smartphone des Benutzers oder eine einem Benutzer persönlich zugeordnete Fernsteuerung handeln. Entscheidend dabei ist, dass das Endgerät dem Benutzer fest zugeordnet ist, so dass aus der Kombination von Endgerät und Baugerät geschlossen werden kann, dass das Baugerät genau von dem bestimmten Benutzer bedient wird.

Dabei ist es möglich, dass auf einem Endgerät auch mehrere Benutzer hinterlegt sind, die jeweils vor Arbeitsbeginn ihre individuell hinterlegten, persönlichen Profile aktivieren müssen. Somit soll sichergestellt werden, dass die Kombination Baugerät - Endgerät (Benutzer) eindeutig ist.

Die Datenvorrichtung dient zum Austauschen von Daten zwischen dem Baugerät und dem Endgerät. Hierunter ist übergeordnet zum Beispiel eine Funkstrecke mit entsprechenden Sendern und Empfängern etc. zu verstehen. Da das Endgerät unabhängig von dem Baugerät bewegt werden kann und auch - je nach Anwendungsfall - eine Entfernung von mehreren Metern zwischen Baugerät und Endgerät bestehen kann, ist die Datenvorrichtung dazu ausgebildet, den Datenaustausch sicher zu bewerkstelligen.

Die Identifikationseinrichtung dient zum Identifizieren der Kombination aus Baugerät und Endgerät. Hierbei können bereits vorher entsprechende Kombinationen von Baugerät und bekanntem Endgerät (und damit bekanntem Benutzer) hinterlegt werden. Insbesondere kann für jeden Benutzer, der das Baugerät bedienen soll, ein eigenes Profil hinterlegt werden. Dadurch, dass der Benutzer das Endgerät benutzt (und gegebenenfalls sein Profil freigeschaltet hat) ist die Kombination von Baugerät und Endgerät/Benutzer eindeutig identifizierbar.

Zum Dokumentieren der Betriebsparameter können diese im Endgerät oder im Baugerät gespeichert werden. Dabei ist auch eine verteilte Speicherung (ein Teil der Parameter im Endgerät, ein Teil im Baugerät) oder eine doppelte Speicherung (vollständige Parametersätze werden sowohl im Endgerät als auch im Baugerät gespeichert) möglich.

Die Betriebsparameter können separat für die jeweils identifizierte Kombination gespeichert bzw. dokumentiert werden. Dementsprechend werden die erfassten Betriebsparameter individuell für den jeweils aktuell das Baugerät bedienenden Benutzer bzw. sein persönliche zugeordnetes Endgerät gespeichert.

Durch die Aktivierungseinrichtung können geeignete Maßnahmen aktiviert werden, die ebenfalls in Abhängigkeit von der identifizierten Kombination von Baugerät und Endgerät/Benutzer vorab definiert sein können, wie später noch erläutert wird.

Die Betriebsparameter können ausgewählt sein aus der Gruppe Schwingungsintensität an dem Baugerät; Hand-Arm-Vibrationen, die auf einen das Baugerät führenden Benutzer einwirken; Arbeitszeit des Baugeräts; Arbeitsfortschritt; Position des Baugeräts; etc.

Dabei kann zum Beispiel die Schwingungsintensität an dem Baugerät durch einen entsprechend positionierten Schwingungssensor an dem Baugerät gemessen werden, insbesondere in der Nähe eines Führungshandgriffs, an dem der Benutzer das Baugerät führt.

Auf diese Weise können zum Beispiel auch die Hand-Arm-Vibrationen erfasst werden, die auf den das Baugerät führenden Benutzer einwirken. Diesbezüglich gibt es strenge Richtlinien und Normen, damit eine gesundheitliche Schädigung des Benutzers verhindert werden kann. Insbesondere ist es gesetzlich geregelt, welche Vibrationsstärken über welche Zeiträume auf einen Benutzer einwirken dürfen. Zudem bestehen Anforderungen, die tatsächlich auf den Benutzer einwirkenden Vibrationen dauerhaft zu dokumentieren, um nachweisen zu können, dass der Benutzer gesetzeskonform und dementsprechend unter Berücksichtigung aller Gesundheitsanforderungen gearbeitet hat.

Der Arbeitsfortschritt des Baugeräts kann in geeigneter Weise bestimmt werden. Zum Beispiel kann bei dem Überfahren einer Fläche die Position des Baugeräts und damit auch der Bewegungsweg des Baugeräts erfasst und dokumentiert werden. Dementsprechend kann die Position des Baugeräts nachverfolgt werden.

Alternativ kann als Kriterium für den Arbeitsfortschritt auch zum Beispiel der Verdichtungsgrad genommen werden, wenn das Baugerät zur Bodenverdichtung dient. Für diesen Zweck sind Messsysteme bekannt, mit denen zum Beispiel direkt an einer Vibrationsplatte aufgrund von deren Schwingungsverhalten der Verdichtungsgrad des darunter befindlichen Bodens gemessen werden kann.

Die durch die Aktivierungseinrichtung aktivierbaren Maßnahmen können vielfältig sein. Dazu gehört zum Beispiel eine benutzerspezifische Reaktion des Baugeräts auf die Eingabe eines Bedienbefehls über ein Bedienelement. Zum Beispiel kann das Drehzahlverhalten eines Antriebsmotors des Baugeräts abhängig sein von der Stellung eines Drehzahl- oder Gashebels, wobei der Zusammenhang zwischen Hebelstellung und Drehzahl durch eine Kennkurve oder ein Kennfeld vorbestimmt werden kann. So kann zum Beispiel ein aggressives oder weniger aggressives Drehzahl-Verhalten des Antriebsmotors vorgegeben werden.

Dabei ist es wichtig, dass diese Definition benutzerspezifisch vorgegeben ist, also von der erkannten Kombination aus Baugerät und Endgerät bestimmt wird. Die Einstellung der Reaktion des Baugeräts kann somit individuell für den jeweiligen Benutzer vordefiniert werden.

Eine weitere Maßnahme, die durch die Aktivierungseinrichtung bewirkt werden kann, ist die benutzerspezifische Belegung von Bedienelementen. Dabei kann ein Benutzer individuell vorgeben, welches Bedienelement am Baugerät welche Funktion haben soll. Wenn die Kombination des Benutzer-Endgeräts mit dem Baugerät erkannt wird, werden die Bedienelemente entsprechend vorbelegt.

Eine andere mögliche Maßnahme ist die benutzerspezifisch vorgegebene Einschaltzeit und/oder Einschaltdauer. Dies umfasst zum Beispiel, wann ein Benutzer eine Maschine in Betrieb nehmen kann und wie lange. Zudem kann auch eine Unterbrechungszeit vorgegeben werden, die zwischen einer Abschaltung des Baugeräts und einer erneuten Wiederinbetriebnahme verstreichen soll.

Andere Maßnahmen können zum Beispiel benutzerspezifische Beleuchtungseinstellungen sowie benutzerspezifische akustische Signale (Warntöne, Tastentöne) sein.

Wenn das Baugerät bestimmte Assistenzsysteme zur Verfügung stellt, kann das Ein- oder Ausschalten dieser Assistenzsysteme benutzerspezifisch vorgegeben werden. So kann ein Benutzer vorab wählen, welche Assistenzsysteme er stets nutzen möchte und welche nicht. Ebenso könnte durch einen Administrator auch für dritte Benutzer vorgegeben werden, welche Assistenzsysteme sie zu nutzen haben. Auf diese Weise kann zum Beispiel zwingend ein Assistenzsystem vorgegeben werden, das der Benutzer mangels entsprechender Rechte nicht eigenständig abschalten kann.

Dazu zählt auch das benutzerspezifische Parametrieren von Assistenzsystemen, bei dem das Verhalten und die Einstellung von Assistenzsystemen in Abhängigkeit von der Kombination von Baugerät und Benutzer/Endgerät automatisch vorgenommen werden kann.

Alle diese Maßnahmen eröffnen die Möglichkeit, das Verhalten des Baugeräts individuell an den jeweils aktuellen und dementsprechend über sein Endgerät erkannten Benutzer anzupassen. Die entsprechenden Daten können zum Beispiel als Tabellen oder Kennfelder in einer Software hinterlegt sein.

Die Datenvorrichtung kann eine an dem Baugerät anordenbare Kommunikationseinrichtung aufweisen, wobei der Datenaustausch zwischen dem Endgerät und dem Baugerät über die Kommunikationseinrichtung erfolgt. Dabei ist es möglich, dass der Datenaustausch zum Beispiel drahtlos über eine Funkstrecke, WLAN, Bluetooth, Mobilfunk etc. erfolgt.

Bei einer Variante kann das Endgerät wenigstens einen Teil der Dokumentationseinrichtung aufweisen. Das bedeutet, dass das Endgerät benutzerspezifische Daten und Parameter, die auf das Baugerät bezogen sind, speichern kann, so dass auch auf der Seite des Endgeräts jeweilige Benutzer in Kombination mit einem bestimmten Baugerät angemeldet werden können. Ein anderer Teil der Daten kann auf dem Baugerät gespeichert werden.

Das Endgerät kann ein mobiles Endgerät oder ein stationäres Endgerät sein. Bei einem mobilen Endgerät kann es sich insbesondere um ein Smartphone handeln, das dem Benutzer unmittelbar zugeordnet und für diesen individualisiert ist.

Dementsprechend kann es sich dabei um das Smartphone des Benutzers handeln, das dieser auch für viele andere Zwecke verwendet. In diesem Fall stellen die an dieser Stelle für das Endgerät offenbarten Funktionen eine Softwareapplikation auf dem Smartphone dar.

Alternativ kann das Endgerät auch ein stationäres Endgerät sein. In diesem Fall kann es zum Beispiel durch einen Computer oder Server gebildet oder auch durch eine Cloud verwirklicht werden, wobei jedoch eine Zuordnung zu einem Benutzer erforderlich ist, um die gewünschte Individualisierungsmöglichkeit zu verwirklichen.

Es wird ein Verfahren zum Individualisieren und Steuern eines Baugeräts angegeben, mit den Schritten:
- Austauschen von Daten zwischen dem Baugerät und einem getrennt von dem Baugerät vorgesehenen benutzerseitigen Endgerät;
- Identifizieren einer Kombination aus Baugerät und Endgerät aufgrund von ausgetauschten Daten;
- Dokumentieren von Betriebsparametern für die identifizierte Kombination von Baugerät und Endgerät;
- Aktivieren von Maßnahmen auf Seiten des Baugeräts in Abhängigkeit von der identifizierten Kombination von Baugerät und Endgerät.

Die Reihenfolge der Schritte "Dokumentieren" und "Aktivieren" ist dabei nicht zwingend. Vielmehr können diese Schritte auch parallel bzw. in beliebiger Reihenfolge ausgeführt werden.

Bei einer Ausführungsform kann von dem Baugerät eine Schwingungs-Information über eine Schwingungsbelastung eines Benutzers zu dem Endgerät übertragen werden, wobei in dem Endgerät ein Vibrations-Grenzwert für eine individuell zulässige Hand-Arm-Vibration für einen das Baugerät führenden Benutzer definiert sein kann, wobei die Schwingungs-Information mit dem Vibrations-Grenzwert verglichen werden kann, und wobei bei Überschreiten des Vibrations-Grenzwerts durch die Schwingungs-Information eine Maßnahme aktiviert werden kann.

Dementsprechend kann bei dieser Ausführungsform die HAV-Dosis (Hand-Arm-Vibrationen), der der Benutzer beim Betrieb des Baugeräts ausgesetzt war, dokumentiert werden. Bei Erreichen eines Grenzwerts kann der Benutzer gewarnt oder sogar die Maschine gesperrt werden. Das Verfahren ermöglicht somit eine gute und insbesondere kontinuierliche bzw. wenigstens engmaschige Überwachung der auf den Benutzer einwirkenden Schwingungen. Wenn der zulässige Grenzwert, der zum Beispiel durch Arbeitsschutzvorschriften vorgegeben sein kann, erreicht wird, wird automatisch eine entsprechende Maßnahme aktiviert, die eine Warnung oder ein Stoppen des Baugeräts umfassen kann.

Zusätzlich zu den in Abhängigkeit von der identifizierten Kombination von Baugerät und Endgerät aktivierbaren Maßnahmen können auch Kombinations-unabhängige Vorschriften in dem Endgerät hinterlegt sein, durch die die Benutzung des Baugeräts eingeschränkt wird. Es handelt es sich also dabei um Vorschriften, die nicht auf einen individuellen Benutzer bezogen sind, sondern generell für alle Benutzer relevant sind. Dabei kann es sich zum Beispiel um eine Einschränkung der Benutzung handeln, um zum Beispiel vereinbarte Arbeitszeiten einzuhalten oder eine Lärmemission einzuschränken. Wie oben aber bereits erläutert, kann eine Einschränkung der Benutzung auch in Abhängigkeit von der identifizierten Kombination Baugerät - Endgerät möglich sein. In diesem Fall ist somit eine benutzerindividualisierte Einschränkung möglich.

Das beschriebene System und das beschriebene Verfahren erfordern ein Zusammenspiel zwischen einem Endgerät und einem Baugerät. Das Baugerät kann ausgewählt sein aus der Gruppe besitzbares Baugerät, fahrbares Baugerät mit Räder- oder Kettenfahrwerk, Lader, Radlader, Bagger, Vibrationsplatte zur Bodenverdichtung, Stampfer zur Bodenverdichtung etc.

Es wird ein Computerprogramm angegeben, umfassend Befehle, die bei der Ausführung des Programms durch einen Computer diesen veranlassen, das oben beschriebene Verfahren auszuführen. Insbesondere kann dieses Computerprogramm als Softwareapplikation wenigstens teilweise auf einem Endgerät, zum Beispiel einem Smartphone, ausgeführt werden.

Diese und weitere Vorteile und Merkmale der Erfindung werden nachfolgend anhand eines Beispiels unter Zuhilfenahme der begleitenden Figuren näher erläutert. Es zeigt:

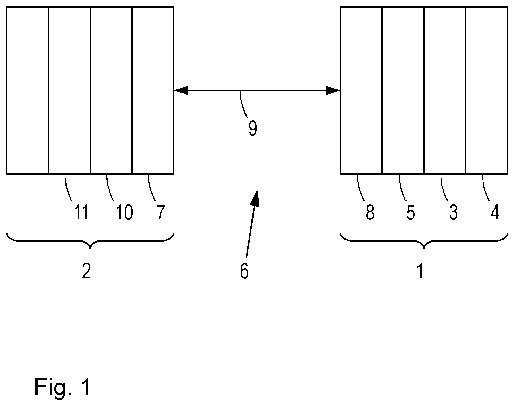

- **Fig. 1**: in schematischer Darstellung ein System zum Individualisieren und Steuern eines Baugeräts.

Fig. 1 zeigt in schematischer Darstellung insbesondere ein Baugerät 1 und ein getrennt von dem Baugerät 1 vorgesehenes Endgerät 2, das zum Beispiel in Form eines Smartphones realisiert sein kann.

Das Baugerät 1 kann vielfältig ausgebildet sein und insbesondere zum Verrichten von bestimmten Arbeitsvorgängen dienen. Verschiedene Beispiele für Baugeräte wurden oben bereits erläutert, so dass an dieser Stelle auf eine Wiederholung verzichtet wird.

Das Baugerät 1 weist einen Antrieb 3, eine Arbeitsvorrichtung 4 zum Verrichten der gewünschten Arbeit (z.B. einen Schwingungserreger, einen Stampfantrieb, einen Hydraulikantrieb, einen Fahrantrieb etc.) sowie eine Steuerung 5 auf. Die Steuerung 5 dient als Gerätesteuerung und kann eine Vielzahl von für das jeweilige Baugerät üblichen bzw. sinnvollen Funktionen durchführen.

Weiterhin ist eine Datenvorrichtung 6 vorgesehen, mit einer Endgerät-seitigen Kommunikationseinrichtung 7 und einer Baugerät-seitigen Kommunikationseinrichtung 8. Die beiden Kommunikationseinrichtungen 7, 8 können als Sender und Empfänger ausgebildet sein und kommunizieren miteinander über eine Datenstrecke 9, die insbesondere drahtlos ausgebildet ist.

Somit können zwischen dem Baugerät 1 und dem Endgerät 2 vielfältige Daten und Informationen ausgetauscht werden. Bei den Daten kann es sich insbesondere um Betriebsparameter, Statusinformationen etc. handeln. Vom Endgerät 2 können vor allem Steuerbefehle an das Baugerät 1 übermittelt werden.

Zudem ist wenigstens auf der Seite des Endgeräts 2 eine Identifikationseinrichtung 10 vorhanden, die die Kombination aus Baugerät 1 und Endgerät 2 aufgrund der ausgetauschten Daten identifiziert. Die Identifikationseinrichtung 10 kann dabei als Softwareapplikation auf dem Endgerät 2 verwirklicht sein. Mit ihrer Hilfe wird erkannt, welches Endgerät 2 mit dem Baugerät 1 in Kontakt steht. Da das Endgerät 2 einem Benutzer direkt zugeordnet ist, kann daraus auch geschlossen werden, welcher Benutzer in diesem Moment das Baugerät 1 führt und steuert.

Weiterhin ist wenigstens auf der Seite des Endgeräts 2 eine Dokumentationseinrichtung 11 vorgesehen, zum Dokumentieren bzw. Speichern von Parametern, die für den Betrieb des Baugeräts 1 in Kombination mit dem Endgerät 2 relevant sind. Die Dokumentationseinrichtung 11 kann softwaremäßig realisiert sein und z.B. auch teilweise auf das Baugerät 1 verteilt sein.

Aufgrund der erkannten Kombination aus Baugerät 1 und Endgerät 2 können verschiedene weitere Betriebsparameter dokumentiert werden und dem Benutzer des Baugeräts 1 zugeordnet werden. Weiterhin können in Abhängigkeit von der erkannten Kombination verschiedene Maßnahmen aktiviert werden. Die Betriebsparameter und die Maßnahmen wurden oben bereits eingehend erläutert, so dass an dieser Stelle auf eine Wiederholung verzichtet wird.

## Patentansprüche

1. System zum Individualisieren und Steuern eines Baugeräts (1), mit
- einem getrennt von dem Baugerät (1) vorgesehenen benutzerseitigen Endgerät (2);
- einer Datenvorrichtung (6, 7, 8) zum Austauschen von Daten zwischen dem Baugerät (1) und dem Endgerät (2);
- einer Identifikationseinrichtung (10) zum Identifizieren einer Kombination aus Baugerät (1) und Endgerät (2) aufgrund von ausgetauschten Daten;
- einer Dokumentationseinrichtung (11) zum Dokumentieren von Betriebsparametern für die identifizierte Kombination von Baugerät () und Endgerät (2); und mit
- einer Aktivierungseinrichtung zum Aktivieren von Maßnahmen auf Seiten des Baugeräts (1) in Abhängigkeit von der identifizierten Kombination von Baugerät (1) und Endgerät (2).

2. System nach Anspruch 1, wobei die Betriebsparameter ausgewählt sind aus der Gruppe:
- Schwingungsintensität an dem Baugerät (1)
- Hand-Arm-Vibrationen, die auf einen das Baugerät (1) führenden Benutzer einwirken
- Arbeitszeit des Baugeräts (1)
- Arbeitsfortschritt
- Position des Baugeräts (1).

3. System nach Anspruch 1 oder 2, wobei die Maßnahmen ausgewählt sind aus der Gruppe:
- Benutzerspezifische Reaktion des Baugeräts (1) auf Eingabe von Bedienbefehl über Bedienelement
- Benutzerspezifische Belegung von Bedienelementen
- Benutzerspezifische Einschaltzeit und/oder Einschaltdauer
- Benutzerspezifische Beleuchtungseinstellungen
- Benutzerspezifische akustische Signale
- Benutzerspezifisches Ein- oder Ausschalten von Assistenzsystemen
- Benutzerspezifisches Parametrieren von Assistenzsystemen.

4. System nach einem der vorstehenden Ansprüche, wobei
- die Datenvorrichtung eine an dem Baugerät (1) anordenbare Kommunikationseinrichtung (8) aufweist; und wobei
- der Datenaustausch zwischen dem Endgerät (2) und dem Baugerät (1) über die Kommunikationseinrichtung (8) erfolgt.

5. System nach einem der vorstehenden Ansprüche, wobei das Endgerät (2) wenigstens einen Teil der Dokumentationseinrichtung (11) aufweist.

6. System nach einem der vorstehenden Ansprüche, wobei das Endgerät (2) ein mobiles Endgerät oder ein stationäres Endgerät ist.

7. Verfahren zum Individualisieren und Steuern eines Baugeräts (1), mit den Schritten
- Austauschen von Daten zwischen dem Baugerät (1) und einem getrennt von dem Baugerät (1) vorgesehenen benutzerseitigen Endgerät (2);
- Identifizieren einer Kombination aus Baugerät (1) und Endgerät (2) aufgrund von ausgetauschten Daten;
- Dokumentieren von Betriebsparametern für die identifizierte Kombination von Baugerät (1) und Endgerät (2);
- Aktivieren von Maßnahmen auf Seiten des Baugeräts (1) in Abhängigkeit von der identifizierten Kombination von Baugerät (1) und Endgerät (2).

8. Verfahren nach Anspruch 7, wobei
- von dem Baugerät (1) eine Schwingungs-Information über eine Schwingungsbelastung eines Benutzers zu dem Endgerät (2) übertragen wird;
- in dem Endgerät (2) ein Vibrations-Grenzwert für eine individuell zulässige Hand-Arm-Vibration für einen das Baugerät (1) führenden Benutzer definiert ist;
- die Schwingungs-Information mit dem Vibrations-Grenzwert verglichen wird; und wobei
- bei Überschreiten des Vibrations-Grenzwerts durch die Schwingungs-Information eine Maßnahme aktiviert wird.

9. Verfahren nach Anspruch 7 oder 8, wobei zusätzlich zu den in Abhängigkeit von der identifizierten Kombination von Baugerät (1) und Endgerät (1) aktivierbaren Maßnahmen Kombinations-unabhängige Vorschriften in dem Endgerät (2) hinterlegt sind, durch die die Benutzung des Baugeräts (1) eingeschränkt wird.

10. System nach einem der Ansprüche 1 bis 6 oder Verfahren nach einem der Ansprüche 7 bis 9, wobei das Baugerät (1) ausgewählt ist aus der Gruppe:
- besitzbares Baugerät
- fahrbares Baugerät mit Räder- oder Kettenfahrwerk
- Lader
- Radlader
- Bagger
- Vibrationsplatte zur Bodenverdichtung
- Stampfer zur Bodenverdichtung
- Geräte zur Betonverdichtung, Innenrüttler, Außenrüttler
- Aufbruchhämmer
- Fugenschneider.

11. Computerprogramm, umfassend Befehle, die bei der Ausführung des Programms durch einen Computer diesen veranlassen, das Verfahren nach einem der Ansprüche 7 bis 9 auszuführen.
